# EUROPEAN PATENT SPECIFICATION

(11) **EP 3 159 828 B1**
(45) Date of publication and mention of the grant of the patent: **02.03.2022**
(21) Application number: 15190333.3
(22) Date of filing: 19.10.2015
(51) Int. Cl.: G06K 9/32, G06T 7/00, G06T 7/80

(54) **ADAPTIVE CALIBRATION USING VISIBLE CAR DETAILS**
ADAPTIVE KALIBRIERUNG MIT SICHTBAREM AUTOEINZELHEITEN
ÉTALONNAGE ADAPTATIF UTILISANT DES DÉTAILS DE VOITURE VISIBLES

(43) Date of publication of application: 26.04.2017
(73) Proprietor: Continental Automotive GmbH, 30165 Hannover (DE)
(72) Inventor: Gagnon, Peter, Brighton, BN15PS (GB); Gao, Lingjun, Uckfield, TN22 5BZ (GB); Laguzet, Florence, Brighton, BN1 2PN (GB); Lawson, Clifford, Finchingfield, CM7 4JU (GB); Yadav, Dev, Lewes, BN7 2SA (GB)
(74) Representative: Continental Corporation

(56) References cited:
- EP-A2- 2 249 288
- WO-A2-2004/042673
- WO-A2-2006/134498
- JP-A- 2010 139 275
- US-A1- 2010 082 281
- US-A1- 2010 131 197

## Description

The present application relates vehicle cameras and specifically to an adaptive calibration of vehicle cameras.

The invention is set forth in the appended claim.

Relevant prior art JP 2010 139275 A (RICOH KK) 24 June 2010 (2010-06-24) discloses a method where camera calibration is carried out using a comparison between the size of a detected license place in acquired image data of a neighbouring vehicle with a standardized license plate size.

Camera calibration parameters are divided into intrinsic and extrinsic parameters. The intrinsic parameters describe the transformation of a light ray that passes through the lens and reaches the image sensor. This transformation is non-linear in the specific case of the fish eye image.

The extrinsic parameters describe the transformation of a point from the world into the camera referential. Combining these two transformations it is possible to relate a point in the image with a point in the world. In general, the intrinsic parameters are fixed and are defined in the factory. The extrinsic parameters are specific for the each application and may change over time.

In the context of the present specification, the extrinsic parameters map a point from the vehicle referential into the camera referential. These parameters may change for various reasons such as camera housing deterioration, low tyre pressure, etc. Known methods to determine the extrinsic parameters involve the detection of targets used for calibration.

In the context of the present specification the intrinsic parameters are known, for example by a factory setting or a prior calibration and the extrinsic parameters are to be determined. Generally, the extrinsic parameters comprise three rotation parameters and three translation parameters.

It is an object of the present specification to provide an improved method and device for deriving extrinsic camera parameters using known features of a detected neighbouring vehicle.

The method according to the present specification is particularly suitable for acquiring a calibration target reliably while camera is moving and for providing an adaptive calibration of extrinsic camera parameters. The adaptive calibration is carried out while the vehicle on which the camera is mounted is in use and in particular during driving on a public road. In most cases this means that the vehicle camera is moving.

In a specific embodiment, the extrinsic parameters relate to three rotation angles, which can be provided by a horizontal and a vertical inclination angle of the camera and a rotation of the image around the projection axis of the camera. The extrinsic parameters can furthermore include a height of the camera above ground level. A horizontal position of the vehicle camera with respect to the vehicle frame is often known but may also be calibrated.

Target based calibration usually requires a fixed target, which has a known position with respect to the camera position. If the camera is moving this would require to change the position of a calibration target accordingly whenever the camera position changes. In most situations this is not feasible. According to another method, a target is projected by a car using a laser for example. The position of that laser would have to be calibrated and it could also change over time.

The use of multiple images from the same camera is often a complicated problem to solve. It is possible to determine the position of the camera related to a referential but it is difficult to get the scale factor. The use of multiple cameras can present difficulties if the common areas in the image are small and are on the corners of the image. These regions are affected by the camera distortion and it is difficult to identify and match features.

By contrast, a method according to the present specification does not require multiple images, images from multiple cameras or a complex stereo camera although such features may be used if they are available. For example, multiple images of the same target may be processed separately and the separate estimates of the extrinsic parameters can be averaged or accumulated.

A fixed target based camera extrinsic calibration works best with a fixed and known target. However, it is often difficult and practically not possible to acquire a fixed and known target when the camera is moving. By contrast, a method according to the present specification allows in certain situations to acquire a known target even when the vehicle camera, the target or both of them are moving. This feature can help to provide a good calibration of extrinsic parameters.

Extrinsic camera calibration often requires a fixed target to estimate the extrinsic parameters. Instead of a fixed target the method according to the present specification uses the image of a vehicle in the scenery, acquires a known vehicle feature and uses it as fixed target. Each vehicle model has known features, for example the number plate size, the character size on the number plate, the vehicle height, the vehicle width, the tyre width, chassis height and width etc. Each of these features can give a cue to provide a calibration of extrinsic camera parameters.

In particular, the vehicle can refer to registered motor vehicles that carry number plates. Specifically, motor vehicles with three or more wheels of a known type can provide well recognizable visual features. However, two wheelers, such as motor bikes, can also be used for calibration purposes. For example, the height of the number plate can be derived from the vehicle type of a motor bike and used in the camera calibration.

According to the present specification, a database is provided with characterizing data about the outer dimensions of popular vehicle models, such as height, width, number plate size, tyre width and height, chassis width and height. According to a further embodiment, the database comprises additionally information about the size of each individual character on a vehicle number plate.

The database is used for extrinsic calibration through automated interpretation of vehicle images in the image frames of one or more vehicle cameras.

According to one embodiment, a number plate recognition is used to recognise the vehicle number plate and the vehicle number plate data is used to derive dimensional information that contributes to solving the calibration problem.

In particular, the vehicle number plate characters have standard type and size. For example the number plate characters of the European Union have a uniform design across a large geographical region.

Once the number plate characters are recognised, they can be used to find out the vehicle model if corresponding data can be retrieved from a database. The database is indexed for faster searching. In one embodiment this comprises indexing a data field corresponding to the vehicle mode. In another embodiment, data fields corresponding to the visible features of the vehicle are indexed. The database index may comprise a multi-field index, which indexes multiple data fields for easier retrieval of a combination of values.

When the vehicle model is known, the number plate height can be retrieved from the database and the actual size of the characters can be calculated. All of the characters on the number plate can be used as a known target to solve the calibration problem.

Among others, the vehicle model data may contain the vehicle height, the vehicle width, the wheel base, the tyre width, the tail lamp height and width, the head lamp height and width, and the windshield size. All of the dimensional vehicle information, which relates to the outer appearance of the vehicle, can be used as input data to solve the calibration problem.

Specifically, the present application discloses a computer implemented method for an adaptive calibration of a vehicle camera from an image of a neighbouring vehicle. In particular, the neighbouring vehicle can refer to a vehicle driving ahead of or behind a present vehicle to which the camera is mounted. Thereby, visible external features of the neighbouring vehicle can be detected conveniently.

Image data is retrieved from the vehicle camera and the image of the neighbouring vehicle is acquired from the image data. For example, the vehicle can be identified by detecting typical features that characterise the outer appearance and/or the motion of a vehicle.

Furthermore, the vehicle model is retrieved by linking letters or other markers on the number plate to the vehicle type. Moreover, the vehicle type may also be determined using a feedback signal of a licence plate transponder.

The vehicle model is used to retrieve dimensional information of the pre-determined target from an onboard database, which is provided in the present vehicle. In particular, the dimensional information comprises data relating to the absolute size, height and width of visible features. The dimensional information is correlated with the image data, for example by deriving absolute or relative dimensions of visible features of the neighbouring vehicle from the image data by using image recognition methods and comparing the dimensions of the visible features with the retrieved dimensions.

The correlation between the dimensional information and the image of the neighbouring vehicle is used to determine one or more extrinsic parameters of the vehicle camera.

According to a further embodiment, in which the neighbouring vehicle is a vehicle in front of or behind a present vehicle to which the camera is mounted, image data corresponding to a vehicle number plate is identified. The number plate is sometimes also referred to as registration plate or licence plate. Number plate letters of the vehicle number plate are identified. Among others, the letters may represent roman characters or characters of some other alphabet or writing system or numbers.

Dimensional information of the number plate letters of the number plate is retrieved from the onboard database. The letters can be compared with stored letter information directly, and thereby a type of the number plate can be determined, or the type of the number plate can be determined first by using other characteristic features of the number plate, such as the European Union symbol, the positioning of the letters, the alphabet used, a service certificate symbol etc.

In addition to the features of the independent claims, the dimensional information of the letters is correlated with image data relating to the letters and the correlation between the dimensional information of the letters and image data relating to the letters is used to determine one or more extrinsic parameters of the vehicle camera.

According to an embodiment, in addition to the features of the independent claims, the dimensional information in the database comprises a number plate height. The dimensional information of the number plate letters and the height of the number plate are used to derive a relative position of the number plate and to determine the one or more extrinsic parameters from one or more recognized number plate letters.

According to a further embodiment, image data corresponding to a car number plate is identified and a content of the vehicle number plate is identified, such as for example a letter combination or a transponder feedback signal. The identified content of the vehicle number plate is used as a search key to retrieve the vehicle model from an onboard database or from a remote database.

In particular, the vehicle model can be retrieved from a remote database over a wireless connection. The remote database is easier to update and may have a larger data volume than an onboard database. On the other hand, an onboard database can be accessed quickly and permanently and does not incur any transmission fees.

According to specific embodiments, the dimensional information is selected from a vehicle height, a vehicle width, a bumper with, a number plate size, a vehicle height, a vehicle width, a wheel base, a tyre width, a tail lamp height, a tail lamp width, a head lamp height, a head lamp width and a windshield size. In particular the outer dimensions of the vehicle and the distances between the vehicle's lights can provide good recognition features.

According to one embodiment in which the neighbouring vehicle is a vehicle ahead or behind a present vehicle to which the camera is mounted and in which the dimensional information relates to a height above ground surface, a position of a visible feature of the neighbouring vehicle above the ground surface is identified.

According to embodiment, a horizontal orientation of the neighbouring vehicle relative to the vehicle camera, or to a vehicle camera reference system is determined, for example using using vanishing points, focus of expansion/contraction or other image features, and a rectifying transformation is derived from the orientation of the neighbouring vehicle.

One or more extrinsic calibration parameters are derived using parameters of the rectifying transformation. In another embodiment, the rectifying transformation is applied to the image data before deriving dimensional information or information about the relative dimensions of the neighbouring vehicle from the image data.

According to a further embodiment, an affine rectifying transformation is determined in which letters of a number plate of the neighbouring vehicle appear undistorted after correction for the intrinsic parameters. The rectifying transformation is applied to an image portion that comprises image data corresponding to the number plate and a scaling factor is derived from an apparent size of the letters.

According to a further embodiment, visible features which correspond to a multiplicity of vehicle images are stored after successful recognition of a vehicle model or vehicle model, wherein the images may correspond to the same neighbouring vehicle or to different neighbouring vehicles. Preferentially the method comprises storing the visible features or, in other words, data that characterizes the visible features, such as actual width, height vs detected width, or the height and not the vehicle images. However, the vehicle images or portions of it may be stored for later use.

One or more extrinsic camera parameters are derived from the visual features of the multiple images, for example by deriving the one or more extrinsic camera parameters for each image separately and forming an average of the derived extrinsic camera parameters. The average could be a weighted average in which the individual estimates of the average are weighted by an accuracy indicator.

Further, the current specification discloses a computer program with computer readable instructions for executing the steps of the aforementioned method and a computer readable storage medium with the computer program.

In a further aspect, the current specification discloses an image processing device for a vehicle camera the image processing device that comprises an input connection for receiving image data from the vehicle camera and a computation unit.

The computation unit is connected to the input connection and is operative to execute the aforementioned methods by providing suitable hardware components such as a microprocessor, an ASIC, an electronic circuit or similar, a computer readable memory, such as a flash memory, an EPROM, an EEPROM, a magnetic memory or similar.

Specifically, the computation unit is operative to acquire the image of the neighbouring vehicle from the image data, to determine a vehicle model of the neighbouring vehicle from the image data and to use the vehicle model to retrieve dimensional information of the pre-determined target from an onboard database.

Furthermore, the computation unit is operative to correlate the dimensional information with the image data and to use the correlation between the dimensional information and the image of the neighbouring vehicle to determine one or more extrinsic parameters of the vehicle camera.

Furthermore, the current specification discloses a kit with the image processing device and a vehicle camera. The vehicle camera is connectable to the image processing device, for example by providing a suitable interface and means to attach a data cable.

Furthermore, the current specification discloses a vehicle with the kit, wherein the vehicle camera is mounted to the vehicle such that the vehicle camera is pointing to an exterior scenery and connected to the computation unit by a dedicated cable or by an automotive data bus. The computation unit may be provided in the camera or in the vehicle.
- Fig. 1: shows a car with a surround view system,
- Fig. 2: illustrates a projection to a ground plane of an image point recorded with the surround view system of Fig. 1,
- Fig. 3: illustrates in further detail the ground plane projection of Fig. 2,
- Fig. 4: shows an acquisition of dimensional data of a car in front of the car of Fig. 1.

In the following description, details are provided to describe embodiments of the application. It shall be apparent to one skilled in the art, however, that the embodiments may be practiced without such details.

Some parts of the embodiments have similar parts. The similar parts may have the same names or similar part numbers. The description of one similar part also applies by reference to another similar parts, where appropriate, thereby reducing repetition of text without limiting the disclosure.

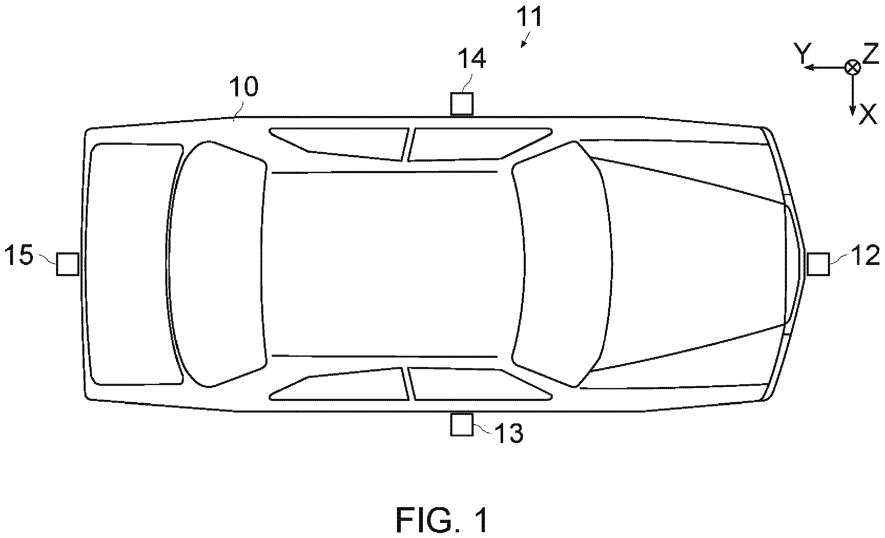

Figure 1 shows a car 10 with a surround view system 11. The surround view system 11 comprises a front view camera 12, a right side view camera 13, a left side view camera 14 and a rear view camera 15. The cameras 11 - 14 are connected to a CPU of a controller, which is not shown in Fig. 1. The controller is connected to further sensors and units, such as a velocity sensor, a steering angle sensor, a GPS unit, and acceleration and orientation sensors.

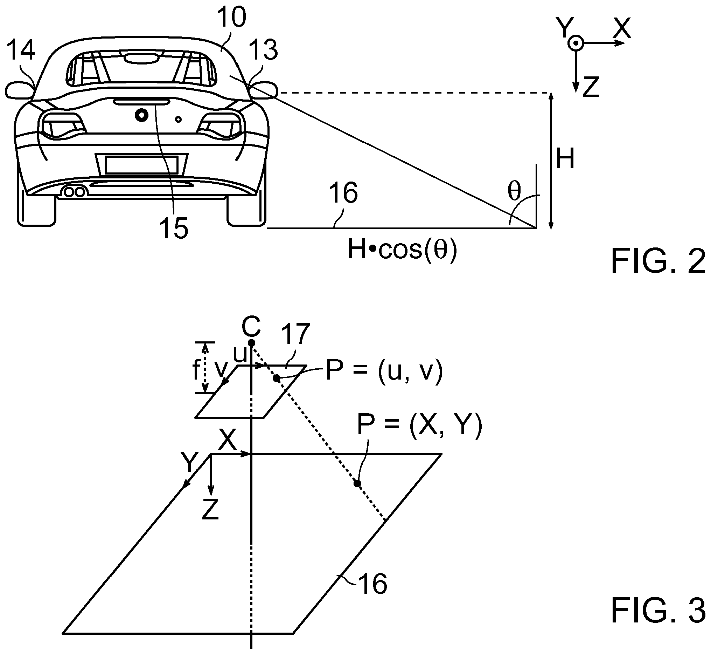

Figs. 2 and 3 show a projection to a ground plane 16. Fig. 2 shows a projection of an image point to a ground plane 16. An angle of inclination θ relative to the vertical can be estimated from a location of the image point on the image sensor of the right side view camera 13. If the image point corresponds to a feature of the road the location of the corresponding object point is the projection of the image point onto the ground plane.

In the example of Fig. 3, the camera 13 has an elevation H above the ground plane. Consequently, the correspond object point is located at a distance H*cos(θ) from the right side of the car 10. If an image point corresponds an object point on the ground plane, a projection of the image point to the ground plane represents the real position of an object point in the surroundings. An angle θ of incidence is derived from a location of the image point on the camera sensor. A location Y of the projection is then derived using the height H of the camera sensor above street level as Y = H * cos(θ).

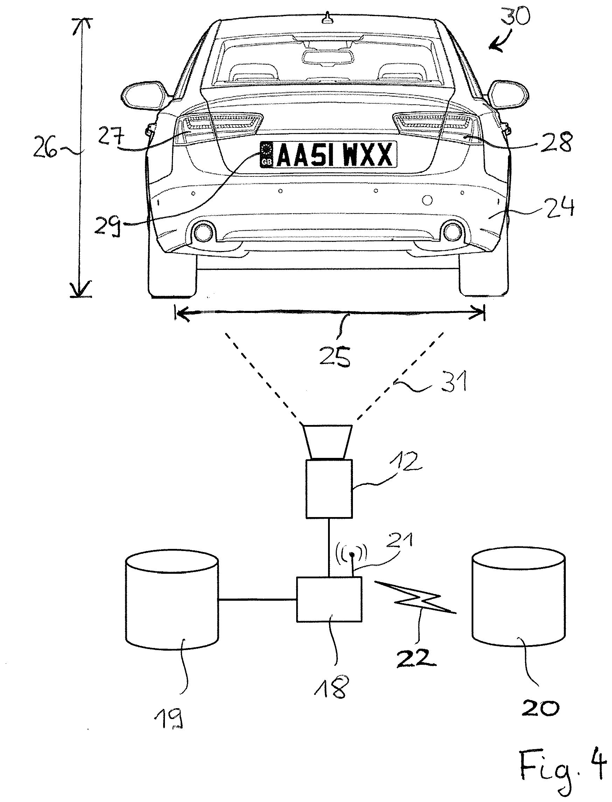

Fig. 3 shows an isometric view of the affine projection of Fig. 2. In Fig. 4, a point in a view port plane 17 is denoted by p = (u, v) and a corresponding point in the ground plane 16 is denoted by P = (X, Y). A distance between the view port plane 17 and a projection centre C is denoted by the letter "f".

A projection to a vertical plane, which is at a right angle to the ground plane, can be provided in a similar way. A vertical view can provide a rectified view of a back-side of a car ahead. Moreover, a projection can be adjusted such that the back side of the car ahead appears rectified and thereby provide information about the camera calibration parameters. In particular, the projection can be adjusted such that characters on a number plate of the car ahead appear rectified.

Fig. 4 shows a recognition procedure of dimensional data of a neighbouring car 30. In the example of Fig. 2, the neighbouring car 30 is in front of the current car 10.

The front camera 12 of the current car 10 is connected to an image processing unit 18. The image processing unit 18 is connected to an onboard database 19 which contains information about vehicle types, such as the width of a rear bumper 24, a wheelbase 25, a vehicle height 26, a position and type of rear lights 27, 28, a position of a number plate 29, etc.

Furthermore, the image processing unit 18 is connectable to a remote database 20 via an antenna 21 of the car 10 and a wireless connection 22. The remote database 20 is connected to the wireless connection 22 over a network, such as the internet. By way of example, the wireless connection 22 can be provided by the antenna 21, and a transmitter and receiver of a wireless network, such as a mobile phone network.

According to one embodiment, the remote database 20 comprises number plate numbers and data about the car 30 which carries the number plate or registration plate. In a usage scenario, the remote database 20 receives a request that contains the number plate string "AA51WXX", retrieves the corresponding car model "Audi A6" and sends the information back to the antenna 21 of the car 10. The image processing 18 retrieves the corresponding dimensional information of the car model from the onboard database 19 and evaluates the image data based on the retrieved dimensional information.

Once the model of the car 30 is retrieved, the dimensional information can be retrieved from the onboard database 19, from the remote database 20 or from other remote data sources. The remote database 20 contains a subset of information that is stored in a vehicle registration database of a state authority. Other remote data sources which may contain similar information include a manufacturer's database and a database of a car servicing contractor.

The car 30 in front of the current car 10 is located within a camera angle 31 of the front camera 12, such that an image of the car's 30 rear side appears in the image data of the vehicle camera 12. The onboard database 20 is updated over the wireless communication link 22 to include further car models. According to a further embodiment, the data which links the number plate strings is already contained in the onboard database 20. The onboard database 20 may be updated using the wireless communication link 22. Furthermore, the onboard database may also be updated over a data carrier, such as a compact disk, on which a list with number plate characters and the corresponding car models can be provided.

## Claims

1. A method for an adaptive calibration of a vehicle camera from an image of a neighbouring vehicle, comprising
- retrieving image data from the vehicle camera,
- acquiring the image of the neighbouring vehicle from the image data,
- determining a vehicle model of the neighbouring vehicle from the image data, by
identifying image data corresponding to a vehicle number plate,
determining a content of the vehicle number plate, and using the content of the vehicle number plate to retrieve the vehicle model from a database,
- using the vehicle model to retrieve dimensional information of a pre-determined target from an onboard database,
- correlating the dimensional information with the image data,
- using the correlation between the dimensional information and the image of the neighbouring vehicle to determine one or more extrinsic parameters of the vehicle camera.

2. The method according to claim 1, wherein the neighbouring vehicle is a vehicle in front of a present vehicle or a vehicle behind the present vehicle, the method comprising
- identifying image data corresponding to a vehicle number plate,
- recognizing number plate letters of the vehicle number plate,
- retrieving dimensional information of the number plate letters of the number plate from the onboard database,
- correlating the dimensional information of the letters with image data relating to the letters,
- using the correlation to determine one or more extrinsic parameters of the vehicle camera.

3. The method according to claim 2, wherein the dimensional information comprises a number plate height, the method comprising using the dimensional information of the number plate letters and the height of the number plate to determine the one or more extrinsic parameters from one or more recognized number plate letters.

4. The method according to one of the preceding claims, comprising retrieving the vehicle model from a remote database over a wireless connection.

5. The method according to one of the preceding claims,
wherein the dimensional information is selected from a vehicle height, a vehicle width, a bumper with, a number plate size, a vehicle height, a vehicle width, a wheel base, a tyre width, a tail lamp height, a tail lamp width, a head lamp height, a head lamp width and a windshield size.

6. The method according to one of the preceding claims,
wherein the neighbouring vehicle is a vehicle ahead of a present vehicle or behind the present vehicle and wherein the dimensional information relates to a height above ground surface, the method comprising deriving a position of a visible feature of the neighbouring vehicle above the ground surface.

7. The method according to one of the preceding claims, comprising determining a orientation of the neighbouring vehicle relative to the vehicle camera,
deriving a rectifying transformation from the orientation of the neighbouring vehicle,
deriving one or more extrinsic calibration parameters using parameters of the rectifying transformation.

8. Method according to one of the preceding claims, comprising determining a rectifying transformation in which letters of a number plate of the neighbouring vehicle appear undistorted,
applying the rectifying transformation to an image portion that comprises image data corresponding to the number plate,
deriving a scaling factor from an apparent size of the letters.

9. A computerreadable storage medium comprising a program adapted to perform the method according to one of the claim 1 to 8.

10. An image processing device for a vehicle camera the image processing device comprising
- an input connection for receiving image data from the vehicle camera,
- a computation unit that is connected to the input connection, the computation unit being operative to acquire the image of the neighbouring vehicle from the image data,
to determine a vehicle model of the neighbouring vehicle from the image data, by identifying image data corresponding to a vehicle number plate, determining a content of the vehicle number plate, and using the content of the vehicle number plate to retrieve the vehicle model from a database,
to use the vehicle model to retrieve dimensional information of a pre-determined target from an onboard database,
to correlate the dimensional information with the image data,
to use the correlation between the dimensional information and the image of the neighbouring vehicle to determine one or more extrinsic parameters of the vehicle camera.

11. A kit, the kit comprising the image processing device of claim 10 and a vehicle camera, wherein the vehicle camera is connectable to the image processing device.

12. A vehicle, the vehicle comprising the kit of claim 11, wherein the vehicle camera is mounted to the vehicle such that the vehicle camera is pointing to an exterior scenery.

## Patentansprüche

1. Verfahren für eine adaptive Kalibrierung einer Fahrzeugkamera von einem Bild eines benachbarten Fahrzeugs, das Folgendes umfasst:
- Abrufen von Bilddaten von der Fahrzeugkamera,
- Erfassen des Bildes des benachbarten Fahrzeugs aus den Bilddaten,
- Bestimmen eines Fahrzeugmodells des benachbarten Fahrzeugs aus den Bilddaten durch
Identifizieren von Bilddaten, die einem Fahrzeugnummernschild entsprechen,
Bestimmen eines Inhalts des Fahrzeugnummernschilds und Verwenden des Inhalts des Fahrzeugnummernschilds, um das Fahrzeugmodell aus einer Datenbank abzurufen,
- Verwenden des Fahrzeugmodells, um Abmessungsinformationen eines vorbestimmten Ziels aus einer Borddatenbank abzurufen,
- Korrelieren der Abmessungsinformationen mit den Bilddaten,
- Verwenden der Korrelation zwischen den Abmessungsinformationen und dem Bild des benachbarten Fahrzeugs, um einen oder mehrere extrinsische Parameter der Fahrzeugkamera zu bestimmen.

2. Verfahren nach Anspruch 1, wobei das benachbarte Fahrzeug ein Fahrzeug vor einem vorhandenen Fahrzeug oder ein Fahrzeug hinter dem vorhandenen Fahrzeug ist, wobei das Verfahren Folgendes umfasst:
- Identifizieren von Bilddaten, die einem Fahrzeugnummernschild entsprechen,
- Erkennen von Nummernschildbuchstaben des Fahrzeugnummernschilds,
- Abrufen von Abmessungsinformationen der Nummernschildbuchstaben des Nummernschilds aus der Borddatenbank,
- Korrelieren der Abmessungsinformationen der Buchstaben mit Bilddaten, die die Buchstaben betreffen,
- Verwenden der Korrelation, um einen oder mehrere extrinsische Parameter der Fahrzeugkamera zu bestimmen.

3. Verfahren nach Anspruch 2, wobei die Abmessungsinformationen eine Nummernschildhöhe umfassen, wobei das Verfahren das Verwenden der Abmessungsinformationen der Nummernschildbuchstaben und der Höhe des Nummernschilds umfasst, um den einen oder die mehreren extrinsischen Parameter aus einem oder mehreren erkannten Nummernschildbuchstaben zu bestimmen.

4. Verfahren nach einem der vorhergehenden Ansprüche, das das Abrufen des Fahrzeugmodells über eine drahtlose Verbindung aus einer entfernten Datenbank umfasst.

5. Verfahren nach einem der vorhergehenden Ansprüche, wobei die Abmessungsinformationen aus einer Fahrzeughöhe, einer Fahrzeugbreite, einer Stoßfängerbreite, einer Nummernschildgröße, einer Fahrzeughöhe, einer Fahrzeugbreite, eines Radstands, einer Reifenbreite, einer Heckleuchtenhöhe, einer Heckleuchtenbreite, einer Scheinwerferhöhe, einer Scheinwerferbreite und einer Windschutzscheibengröße ausgewählt sind.

6. Verfahren nach einem der vorhergehenden Ansprüche, wobei das benachbarte Fahrzeug ein Fahrzeug vor einem vorhandenen Fahrzeug oder hinter dem vorhandenen Fahrzeug ist und wobei die Abmessungsinformationen eine Höhe über Bodenfläche betreffen, wobei das Verfahren das Ableiten einer Position eines sichtbaren Merkmals des benachbarten Fahrzeugs über der Bodenfläche umfasst.

7. Verfahren nach einem der vorhergehenden Ansprüche, das das Bestimmen einer Ausrichtung des benachbarten Fahrzeugs relativ zur Fahrzeugkamera umfasst,
Ableiten einer korrigierenden Transformation aus der Ausrichtung des benachbarten Fahrzeugs,
Ableiten von einem oder mehreren extrinsischen Kalibrierparametern unter Verwendung von Parametern der korrigierenden Transformation.

8. Verfahren nach einem der vorhergehenden Ansprüche, das das Bestimmen einer korrigierenden Transformation, bei der Buchstaben eines Nummernschilds eines benachbarten Fahrzeugs verzerrt erscheinen, umfasst, Anwenden der korrigierenden Transformation auf einen Bildabschnitt, der Bilddaten umfasst, die dem Nummernschild entsprechen,
Ableiten eines Skalierungsfaktors aus einer offensichtlichen Größe der Buchstaben.

9. Computerlesbares Speichermedium, das ein Programm umfasst, das angepasst ist, das Verfahren nach einem der Ansprüche 1 bis 8 durchzuführen.

10. Bildverarbeitungsvorrichtung für eine Fahrzeugkamera, wobei die Bildverarbeitungsvorrichtung Folgendes umfasst:
- eine Eingangsverbindung zum Abrufen von Bilddaten von der Fahrzeugkamera,
- eine Datenverarbeitungseinheit, die mit der Eingangsverbindung verbunden ist, wobei die Datenverarbeitungseinheit zu Folgendem betreibbar ist:
Erfassen des Bildes des benachbarten Fahrzeugs aus den Bilddaten,
Bestimmen eines Fahrzeugmodells des benachbarten Fahrzeugs aus den Bilddaten durch Identifizieren der Bilddaten, die einem Fahrzeugnummernschild entsprechen, Bestimmen eines Inhalts des Fahrzeugnummernschilds und Verwenden des Inhalts des Fahrzeugnummernschilds, um das Fahrzeugmodell aus einer Datenbank abzurufen,
Verwenden des Fahrzeugmodells, um Abmessungsinformationen eines vorbestimmten Ziels aus einer Borddatenbank abzurufen,
Korrelieren der Abmessungsinformationen mit den Bilddaten,
Verwenden der Korrelation zwischen den Abmessungsinformationen und dem Bild des benachbarten Fahrzeugs, um einen oder mehrere extrinsische Parameter der Fahrzeugkamera zu bestimmen.

11. Kit, wobei das Kit die Bildverarbeitungsvorrichtung nach Anspruch 10 und eine Fahrzeugkamera umfasst, wobei die Fahrzeugkamera mit der Bildverarbeitungsvorrichtung verbindbar ist.

12. Fahrzeug, wobei das Fahrzeug das Kit nach Anspruch 11 umfasst, wobei die Fahrzeugkamera derart am Fahrzeug montiert ist, dass die Fahrzeugkamera auf eine äußere Szenerie gerichtet ist.

## Revendications

1. Procédé d'étalonnage adaptatif d'une caméra de véhicule à partir d'une image d'un véhicule voisin, comportant les étapes consistant à
- extraire des données d'image de la caméra de véhicule,
- acquérir l'image du véhicule voisin à partir des données d'image,
- déterminer un modèle de véhicule du véhicule voisin à partir des données d'image,
en identifiant des données d'image correspondant à une plaque d'immatriculation de véhicule,
en déterminant un contenu de la plaque d'immatriculation de véhicule, et
en utilisant le contenu de la plaque d'immatriculation de véhicule pour extraire le modèle de véhicule d'une base de données,
- utiliser le modèle de véhicule pour extraire d'une base de données embarquée des informations dimensionnelles d'une cible prédéterminée,
- corréler les informations dimensionnelles avec les données d'image,
- utiliser la corrélation entre les informations dimensionnelles et l'image du véhicule voisin pour déterminer un ou plusieurs paramètres extrinsèques de la caméra de véhicule.

2. Procédé selon la revendication 1, le véhicule voisin étant un véhicule devant un présent véhicule ou un véhicule derrière le présent véhicule, le procédé comportant les étapes consistant à
- identifier des données d'image correspondant à une plaque d'immatriculation de véhicule,
- reconnaître des lettres de plaque d'immatriculation de la plaque d'immatriculation de véhicule,
- extraire de la base de données embarquée des informations dimensionnelles des lettres de plaque d'immatriculation de la plaque d'immatriculation,
- corréler les informations dimensionnelles des lettres avec des données d'image se rapportant aux lettres,
- utiliser la corrélation pour déterminer un ou plusieurs paramètres extrinsèques de la caméra de véhicule.

3. Procédé selon la revendication 2, les informations dimensionnelles comportant une hauteur de plaque d'immatriculation, le procédé comportant l'utilisation des informations dimensionnelles des lettres de plaque d'immatriculation et de la hauteur de la plaque d'immatriculation pour déterminer le ou les paramètres extrinsèques à partir d'une ou de plusieurs lettres de plaque d'immatriculation reconnues.

4. Procédé selon l'une des revendications précédentes, comportant l'extraction du modèle de véhicule d'une base de données distante via une liaison sans fil.

5. Procédé selon l'une des revendications précédentes, les informations dimensionnelles étant sélectionnées parmi une hauteur de véhicule, une largeur de véhicule, une largeur de pare-choc, une taille de plaque d'immatriculation, une hauteur de véhicule, une largeur de véhicule, un empattement, une largeur de pneus, une hauteur de feu arrière, une largeur de feu arrière, une hauteur de phare, une largeur de phare et une taille de pare-brise.

6. Procédé selon l'une des revendications précédentes, le véhicule voisin étant un véhicule en avant d'un présent véhicule ou derrière le présent véhicule et les informations dimensionnelles se rapportant à une hauteur au-dessus d'une surface du sol, le procédé comportant l'obtention de la position d'une caractéristique visible du véhicule voisin au-dessus de la surface du sol.

7. Procédé selon l'une des revendications précédentes, comportant les étapes consistant à
déterminer une orientation du véhicule voisin par rapport à la caméra de véhicule,
déduire une transformation de redressement de l'orientation du véhicule voisin,
déduire un ou plusieurs paramètres d'étalonnage extrinsèques en utilisant des paramètres de la transformation de redressement.

8. Procédé selon l'une des revendications précédentes, comportant les étapes consistant à
déterminer une transformation de redressement dans laquelle des lettres d'une plaque d'immatriculation du véhicule voisin apparaissent sans distorsion,
appliquer la transformation de redressement à une partie d'image qui comporte des données d'image correspondant à la plaque d'immatriculation,
déduire un facteur d'échelle d'une taille apparente des lettres.

9. Support de stockage lisible par ordinateur comportant un programme prévu pour réaliser le procédé selon l'une des revendications 1 à 8.

10. Dispositif de traitement d'images pour caméra de véhicule, le dispositif de traitement d'images comportant
- une connexion d'entrée servant à recevoir des données d'image en provenance de la caméra de véhicule,
- une unité de calcul qui est reliée à la connexion d'entrée, l'unité de calcul étant fonctionnelle pour acquérir l'image du véhicule voisin à partir des données d'image,
pour déterminer un modèle de véhicule du véhicule voisin à partir des données d'image, en identifiant des données d'image correspondant à une plaque d'immatriculation de véhicule, en déterminant un contenu de la plaque d'immatriculation de véhicule, et en utilisant le contenu de la plaque d'immatriculation de véhicule pour extraire le modèle de véhicule d'une base de données,
pour utiliser le modèle de véhicule afin d'extraire d'une base de données embarquée des informations dimensionnelles d'une cible prédéterminée,
pour corréler les informations dimensionnelles avec les données d'image,
pour utiliser la corrélation entre les informations dimensionnelles et l'image du véhicule voisin afin de déterminer un ou plusieurs paramètres extrinsèques de la caméra de véhicule.

11. Kit, le kit comportant le dispositif de traitement d'images selon la revendication 10 et une caméra de véhicule, la caméra de véhicule pouvant être connectée au dispositif de traitement d'images.

12. Véhicule, le véhicule comportant le kit selon la revendication 11, la caméra de véhicule étant montée sur le véhicule de telle façon que la caméra de véhicule soit orientée vers un paysage extérieur.
